# EUROPEAN PATENT APPLICATION

(11) **EP 4 287 428 A1**
(43) Date of publication of application: **06.12.2023**
(21) Application number: 22746190.2
(22) Date of filing: 24.01.2022
(51) Int. Cl.: H02H 7/18, H02H 3/20, H02J 7/00

(54) **OVERVOLTAGE PROTECTION CIRCUIT**

(30) Priority: 28.01.2021 KR 20210012392
(71) Applicant: LG Innotek Co., Ltd., Seoul 07796 (KR)
(72) Inventor: KWON, Gi Hyoung, Seoul 07796 (KR); NA, Ho Jun, Seoul 07796 (KR)
(74) Representative: DREISS Patentanwälte PartG mbB
(86) International application number: PCT/KR2022/001261
(87) International publication number: WO 2022/164163

(57) **Abstract**

An overvoltage protection circuit according to an embodiment of the present invention comprises: an input terminal to which power is input and an output terminal which outputs the power to a load; a first switch that is located between the input terminal and the output terminal and blocks the output to the load when turned off; a first Zener diode that is connected to the input terminal and allows current to flow therethrough upon detecting an overvoltage; a second switch that turns on when the first Zener diode allows current to flow therethrough; and a third switch that turns on when the first switch turns on, wherein the first switch is turned on by the power input to the input terminal, and turns off when the third switch turns on.

## Description

### [Technical Field]

The present invention relates to an overvoltage protection circuit, and more particularly, to an overvoltage protection circuit that protects a load by blocking instantaneous overvoltage and continuous overvoltage.

### [Background Art]

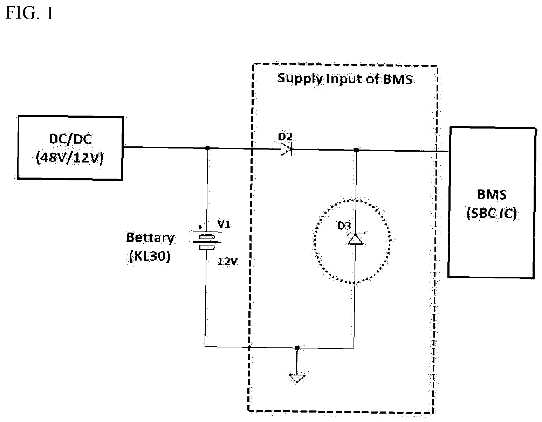

In the case of a device using battery power, such as an electric vehicle, an overvoltage protection circuit that protects the inside is applied when a high voltage is inputted. FIG. 1 is an overvoltage protection circuit being applied to a mild hybrid electric vehicle (MHEV) that receives a power from a DC-DC converter that converts a voltage of 48 V of a 12 V battery and a 48 V battery into 12 V, and outputs it to a battery management system (BMS), but uses a Zener diode to protect against overvoltage.

In the case of a BMS that uses a basic KL30 power supply (12 V battery), an overvoltage protection circuit for an input protects the BMS by limiting the overvoltage (clamping) when an input overvoltage (overshoot) occurs using a Zener diode D3. In the 48V system of a mild hybrid electric vehicle, as the same as above, BMS receives KL30 power, charges the KL30 battery in the 48V/12V DC-DC converter, and supplies power to the load that uses KL30 power.

At this time, when the 48V/12V DC-DC converter fails and 40V over voltage protection (OVP) occurs, there should be no damage to the electrical devices, which are the loads being connected thereto. As shown in FIG. 1, when a Zener diode is used, the instantaneous OVP can be blocked, but when continuous voltage clamping is performed by a continuous OVP, damage occurs due to excessive rated power loss (power dissipation), and thus there is a problem in that the OVP of 40 V or more being inputted continuously cannot be protected.

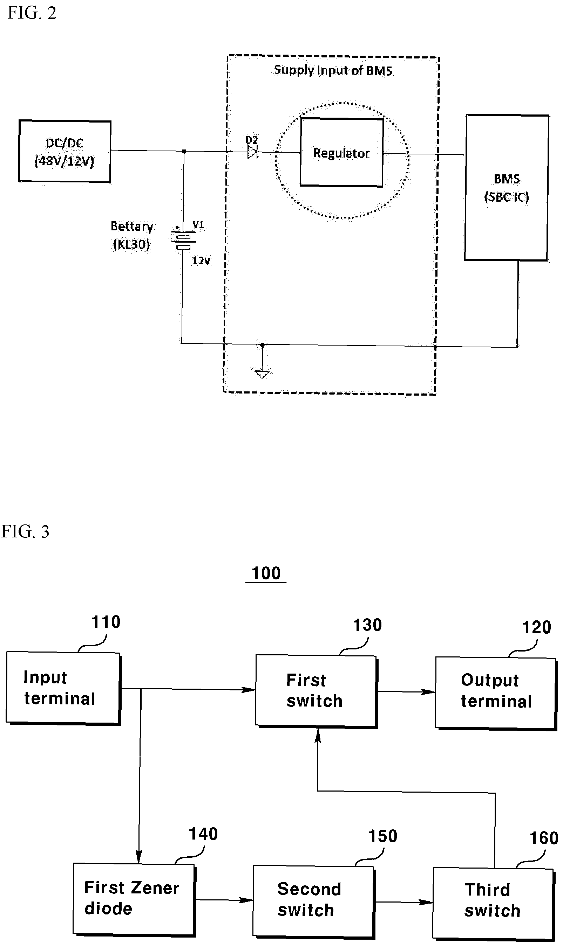

FIG. 2 is an overvoltage protection circuit using a regulator rather than a Zener diode, and even when a regulator is used, damage occurs due to excessive power loss (power dissipation), so there is a problem in that the OVP being inputted continuously cannot be protected.

### [Detailed Description of the Invention]

### [Technical Subject]

A technical problem to be solved by the present invention is an invention of an overvoltage protection circuit for protecting a load by blocking an instantaneous overvoltage and a continuous overvoltage.

### [Technical Solution]

In order to solve the above problem, an overvoltage protection circuit according to an embodiment of the present invention comprises: an input terminal to which power is inputted; an output terminal which outputs the power to a load; a first switch that is located between the input terminal and the output terminal and blocks the output to the load when being turned off; a first Zener diode that is connected to the input terminal and conducted upon detecting an overvoltage; a second switch that is turned on when the first Zener diode is conducted; and a third switch that turns on when the first switch is turned on, wherein the first switch is turned on by the power being inputted to the input terminal, and turned off when the third switch is turned on.

In addition, the first switch is PMOS, the cathode of the first Zener diode is connected to the drain of the first switch, and the anode of the first Zener diode may be connected to the ground through a first resistor and a second resistor being connected in series.

In addition, the second switch is an NMOS, the gate of the second switch is connected to the node between the first resistor and the second resistor, the source of the second switch is connected to the ground, and the drain of the second switch may be connected to a third resistor and a fourth resistor being connected in series.

In addition, the third switch is a PMOS, the gate of the third switch is connected to a node between the third resistor and the fourth resistor, the source of the third switch is connected to the ground through a fifth resistor, and the drain of the third switch may be connected to the drain of the first switch.

In addition, the gate of the first switch is connected to a node between the source of the third switch and the fifth resistor, the source of the first switch is connected to the output terminal, and the drain of the first switch may be connected to the input terminal.

In addition, a sixth resistor and a second Zener diode being respectively connected in parallel between the gate and the drain of the first switch may be included.

In addition, the value of the fifth resistor is greater than the value of the sixth resistor, and the first switch may be turned on by the voltage distribution of the fifth resistor and the sixth resistor when a power is inputted to the input terminal.

In addition, the second Zener diode may detect an overvoltage being applied to the gate of the first switch.

In addition, the input terminal may receive power from a battery or a DC-DC converter that charges the battery.

In addition, the output terminal may be connected to a battery management system.

### [Advantageous Effects]

According to embodiments of the present invention, it is possible to block not only instantaneous overvoltage but also continuous overvoltage. It facilitates the utilization of a PCB space by implementing it through a simple circuit configuration, and it can be implemented at low cost even when adding circuits.

### [Brief Description of Drawings]

FIGS. 1 and 2 illustrate an overvoltage protection circuit according to a comparative embodiment of the present invention.
FIG. 3 is a block diagram of an overvoltage protection circuit according to an embodiment of the present invention.
FIG. 4 is a circuit diagram of an overvoltage protection circuit according to an embodiment of the present invention.

### [BEST MODE]

Hereinafter, preferred embodiments of the present invention will be described in detail with reference to the accompanying drawings.

However, the technical idea of the present invention is not limited to some embodiments to be described, but may be implemented in various forms, and inside the scope of the technical idea of the present invention, one or more of the constituent elements may be selectively combined or substituted between embodiments.

In addition, the terms (including technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may include the plural form unless specifically stated in the phrase, and when described as "at least one (or more than one) of A and B and C", it may include one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also include cases of being 'connected', 'coupled', or 'interconnected' due that another component between that other components.

In addition, when described as being formed or arranged in "on (above)" or "below (under)" of each component, "on (above)" or "below (under)" means that it includes not only the case where the two components are directly in contact with, but also the case where one or more other components are formed or arranged between the two components. In addition, when expressed as "on (above)" or "below (under)", the meaning of not only an upward direction but also a downward direction based on one component may be included.

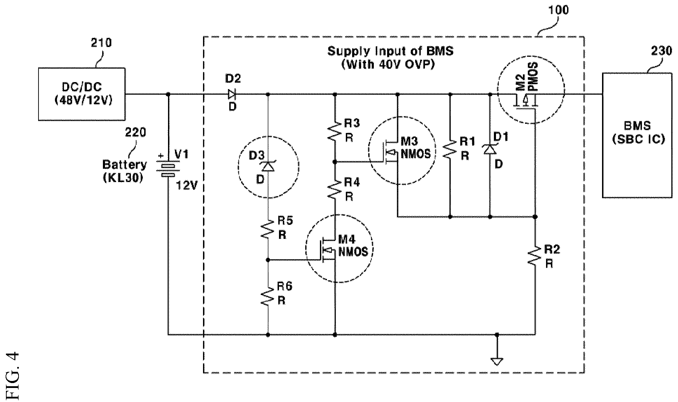

FIG. 3 is a block diagram of an overvoltage protection circuit according to an embodiment of the present invention; and FIG. 4 is a circuit diagram of an overvoltage protection circuit according to an embodiment of the present invention.

The overvoltage protection circuit **100** according to an embodiment of this invention may comprise an input terminal **110,** an output terminal **120,** a first switch **130,** a first Zener diode **140,** a second switch **150,** and a third switch **160,** and may include a second Zener diode, a diode, and resistors.

The input terminal **110** receives power, and the output terminal **120** outputs power to a load. The overvoltage protection circuit outputs the power inputted to the input terminal **110** to the load through the output terminal **120,** and prevents the overvoltage power from being output to the load when overvoltage occurs.

Here, the input terminal **110** may receive power from a battery or a DC-DC converter that charges the battery, and the output terminal **120** is connected to the battery management system. The overvoltage protection circuit **100** according to an embodiment of the present invention may protect the load from an overvoltage being generated when a battery power is applied to a load. For example, when a battery power is inputted to the battery management system (BMS) in a mild hybrid electric vehicle (MHEV), it can play a role of protecting the battery management device when an overvoltage occurs. Here, the battery management device is a device that manages charging and discharging of a battery according to the driving conditions. In the case of a mild hybrid electric vehicle, not only power from a 12 V battery is applied to the battery management device, but also a power converted through a 48V/12V DC-DC converter according to a 48V system may be applied.

When an instantaneous overvoltage occurs from a 12 V battery or a DC-DC converter due to a failure such as a short circuit, it can be protected with a Zener diode, but when a voltage is not normally converted due to a failure of the DC-DC converter, a voltage higher than the rated voltage of 12 V may be continuously inputted. For example, in a DC-DC converter, power with an overvoltage of 40V or more may be inputted, and in this case, damage to the Zener diode occurs, making it difficult to protect a load. To solve this problem, the overvoltage protection circuit **100** according to an embodiment of the present invention uses a plurality of switches.

The first switch **130** is located between the input terminal and the output terminal, and blocks the output to the load when turned off. The first switch **130** is connected to the input line between the input terminal **110** and the output terminal **120,** that is, serves to connect or block the connection between the input terminal **110** and the output terminal **120.** when the first switch **130** is turned off, the connection between the input terminal **110** and the output terminal **120** is blocked, so that the output of power to the load through the output terminal **120** is blocked, thereby protecting the load from overvoltage.

When a power is inputted to the input terminal **110,** the first switch **130** is turned on by the power being inputted to the input terminal **110.** The first switch **130** may be a PMOS, and is turned on by applying a voltage higher than the gate voltage to the gate of the first switch **130** using the power being inputted to the input terminal **110.** The first switch **130** to the third switch **160** may be formed of various switching elements such as passive elements other than MOSFETS.

When the voltage is within the normal range, the first switch **130** maintains an on state after being turned on. However, when an overvoltage occurs, the first switch **130** is turned off using the first Zener diode **140,** the second switch **150,** and the third switch **160.**

The first Zener diode **140** is connected to the input terminal **110** and detects an overvoltage to conduct. The Zener diode is a PN junction diode and has a very low and constant breakdown voltage (Zener voltage) characteristic, so that current flows when a voltage equal to or higher than the Zener voltage is applied in a reverse direction. Using this characteristic, it serves to detect overvoltage being applied to the input terminal **110.**

The first Zener diode **140** is branched and connected at the input terminal **110,** and forms a path so that current flows to the ground when an overvoltage higher than the Zener voltage is applied to the input terminal, so that the overvoltage flows to the ground instead of the output terminal **120.** Through this, the load can be protected from overvoltage. However, when continuous overvoltage is applied, damage may occur to the first Zener diode **140,** and when damage occurs, since normal overvoltage protection is not performed, the first switch **130** must be turned off in order to block continuous overvoltage.

The second switch **150** is turned on when the first Zener diode **140** is turned on, the third switch **160** is turned on when the first switch **130** is turned on, and when the third switch **160** is turned on, the third switch **160** is turned on. When an overvoltage occurs, a process, through which the first Zener diode **140** is conducted, and then the second switch **150** is turned on, and then the third switch **160** is turned on, and then the first switch **130** turns off, is performed to protect the load.

The first switch **130** is a PMOS and the cathode of the first Zener diode **140** is connected to the drain of the first switch **130,** and the anode of the first Zener diode **140** may be connected to the ground through a first resistor and a second resistor connected in series. A current flows to the ground through the first resistor and the second resistor when the first Zener diode **140** is conducted due to an overvoltage.

The second switch **150** is an NMOS, the gate of the second switch **150** is connected to a node between the first resistor and the second resistor, the source of the second switch **150** is connected to ground, and the drain of the second switch **150** may be connected to a third resistor and a fourth resistor being connected in series. NMOS is turned on when the gate-source voltage is higher than the threshold value, and turned off when the gate-source voltage is lower than the threshold value. When the first Zener diode **140** does not conduct, it is connected to the ground by the second resistor, so that the gate-source voltage of the second switch **150** is lower than the threshold value and maintains an off state. When the first Zener diode **140** conducts due to the overvoltage and current flows through the first and second resistors, the overvoltage is distributed and applied to the first and second resistors, and the voltage across the second resistor is applied to the gate of the second switch **150** and the gate-source voltage of the second switch **150** becomes higher than the threshold value, thereby turning the second switch **150** on. The voltage across the second resistor corresponds to the gate-source voltage of the second switch, and when the magnitude of the overvoltage is greater than the threshold value, the resistance values of the first resistor and the second resistor may be set so that the second switch **150** is turned on. For example, when the Zener voltage of the first Zener diode **140** is 30 V, if the overvoltage is 40 V or more, it is set to be cut off; when the threshold value of the gate-source voltage of the second switch **150** is 5 V, 30 V is applied to the first Zener diode **140** when the overvoltage is 40 V; and when the magnitude of the first resistor and the second resistor are set to be the same, 5 V is applied to the second resistor to turn on the second switch **150.** Values of the first resistor and the second resistor may be set in consideration of a voltage loss and an error due to an added diode or element, or may be set by a user. A current flows through the third resistor and the fourth resistor when the second switch **150** is turned on.

The third switch **160** is a PMOS, the gate of the third switch **160** is connected to a node between the third resistor and the fourth resistor, the source of the third switch **160** is connected to the ground through a fifth resistor, and the drain of the third switch **160** may be connected to a drain of the first switch **130.** The PMOS is turned off when the gate-source voltage is higher than the threshold value and turned on when the gate-source voltage is lower than the threshold value. When the second switch **150** is in an off state, the gate of the third switch is connected to the input terminal **110** by a third resistor, so the gate-source voltage of the third switch **160** is higher than the threshold and maintains an off state. When the first Zener diode **140** is conducted and the second switch **150** is turned on by the overvoltage, voltage is applied to the third and fourth resistors, and the gate voltage is lowered by the voltage division of the third resistor and the fourth resistor, and accordingly, the gate-source voltage of the third switch **160** becomes lower than the threshold value to turn on the third switch **160.**

The gate of the first switch **130** is connected to a node between the source of the third switch **160** and the fifth resistor, the source of the first switch **130** is connected to the output terminal **120,** the drain of the first switch **130** is connected to the input terminal **110,** and a sixth resistor and a second Zener diode may be connected in parallel between the gate and the drain of the first switch **130.** Here, the value of the fifth resistor is greater than the value of the sixth resistor, and the first switch **130** may be turned on by voltage distribution between the fifth resistor and the sixth resistor when a power is inputted to the input terminal.

When power having a normal range of voltage is applied to the input terminal, current flows through the fifth and sixth resistors, and a voltage is applied to the gate of the first switch **130** being connected to the node between the fifth and sixth resistors, and at this time, the voltage applied to the sixth resistor may be set to be lower than the threshold value by the voltage distribution of the fifth resistor and the sixth resistor. Through this, the first switch **130** is turned on when the gate-source voltage of the first switch **130** is lower than the threshold value. When the first switch **130** is turned on, the power inputted to the input terminal **110** is outputted to the load through the output terminal **120.**

At this time, when the voltage is in the normal range, the value of the fifth resistor and the value of the sixth resistor may be set such that the gate-source voltage of the first switch **130** is lower than the threshold value. It can be set depending on the voltage being inputted to the input terminal **110,** the threshold value of the gate-source voltage of the first switch **130,** and the magnitude of the voltage across the fifth and sixth resistors. For example, in a situation where 12 V is inputted as a battery voltage in a normal range, when the threshold value of the gate-source voltage of the first switch **130** is 5 V, since the gate-source voltage of the first switch **130** becomes the voltage across the sixth resistor, when the voltage across the fifth resistor is greater than the sixth resistor, the gate-source voltage of the first switch **130** is lower than the threshold so that the first switch **130** can be turned on. To this end, the value of the fifth resistor may be set higher than the value of the sixth resistor.

In normal operation, in order to protect the gate of the first switch **130,** a second Zener diode is connected, and the second Zener diode detects an overvoltage applied to the gate of the first switch **130,** so that application of the overvoltage to the gate of the first switch **130** can be blocked when an overvoltage occurs. When an overvoltage occurs, it may take time until the first switch **130** is turned off by the operation of the first Zener diode **140,** the second switch **150,** and the third switch **160,** so in order to protect the gate of the first switch **130,** a second Zener diode is connected between the gate and the source of the first switch **130.**

When an overvoltage occurs and the first Zener diode **140** conducts, and when the second switch **150** is turned on the third switch **160** is turned on. When the third switch **160** is turned on, current flows along the path of the third switch **160** instead of the sixth resistor. When the gate and source of the first switch **130** are connected through the sixth resistor, since the voltage of the source of the first switch **130** becomes higher than the voltage of the gate, the gate-source voltage of the first switch **130** becomes LOW, so that the first switch **130** maintains an on state. When the third switch **160** is turned on, the potential difference between the source and gate of the first switch **130** is lowered by the turning-on of the third switch **160,** so that the gate-source voltage of the first switch **130** becomes higher than the threshold value, and due to this, it becomes HIGH to turn the first switch **130** off.

The overvoltage protection circuit **100** according to an embodiment of the present invention may be implemented as a circuit shown in FIG. 4.

The overvoltage protection circuit **100** according to an embodiment of the present invention may output a power to a BMS **230,** a battery management device, by receiving a power from the KL 30 power source being formed by the 12 V battery **220** and the 48V/12V DC-DC converter **210.** In order to protect the BMS **230** from overvoltage, the overvoltage protection circuit **100** according to an embodiment of the present invention comprises: **D1,** which is the first Zener diode **140; M1,** which is the first switch **130; M2,** which is the second switch **150;** and **M3** which is the third switch **160,** and may include a diode **D3,** a second Zener diode **D2,** and a first resistor **R1,** a second resistor **R2,** a third resistor **R3,** a fourth resistor **R4,** a fifth resistor **R5,** and a sixth resistor **R6.**

When power is inputted through the input terminal, it is outputted through **D3** and **M1** to the output terminal. Here, **D3** prevents power from being outputted in a reverse direction, that is, to the input terminal. As for **D1,** a Zener voltage may be set to an overvoltage range in order to detect and block the overvoltage. For example, when the normal range of the input voltage is 12 V, the Zener voltage may be set to 27 V to 28 V. This can be set by the required specifications or by a user.

When a normal voltage is applied, **D1** does not conduct due to diode characteristics, and the gate-source voltage of **M2** is lower than a threshold value so that an off state is maintained. When **M2** is in an off state, a high voltage is applied to the gate of **M3** through **R3,** so that the gate-source voltage is higher than the threshold value, so that it is in an off state. When **M3** is off, as for **M1,** according to the voltage division of **R6** and **R5,** the gate-source voltage becomes the voltage across **R6,** by setting the resistance values of **R6** and **R5** to be lower than the threshold value of the gate-source voltage of **M1** in **R6,** thereby turning **M1** on. Through this, in a normal range of the voltage, by setting in a way that **D1** is non-conductive, **M2** and **M3** are turned off, and **M1** is turned on, power of normal voltage can be outputted to the BMS **230. D2** plays the role of detecting overvoltage and preventing it from being applied to **M1.**

When an overvoltage higher than the Zener voltage of **D1** occurs during normal operation, **D1** conducts, and the voltage across **R2** becomes the gate-source voltage of **M2** according to the voltage distribution between **R1** and **R2,** and when the voltage across **R2** becomes greater than the gate-source voltage of **M2, M2** turns on. Values of **R1** and **R2** may be set according to the threshold so that **M2** is turned on when the magnitude of the overvoltage is greater than or equal to the threshold.

When **M2** is turned on, current flows through **R3** and **R4,** the gate voltage of **M3** is lowered by **R4,** and the gate-source voltage of **M3** is lowered than the threshold value to be turned on. When **M3** is turned on, the current does not flow to **R6** and flows to **M3,** so the magnitude of the gate-source voltage of **M1** becomes HIGH from LOW because the potential difference becomes small, and due to this, it is turned off when the gate-source voltage of **M1** becomes greater than the threshold value. When **M1** is turned off, the output of power to the BMS **230** is cut off, thereby protecting the BMS **230** from overvoltage.

As described above, by using a switch together with a Zener diode, an overvoltage can be blocked to protect a circuit such as an IC inside the BMS being connected to the load. Instantaneous overvoltage is detected and blocked by a Zener diode, but for continuous overvoltage, the output to the output terminal can be blocked using a switch that operates sequentially. Through this, in a device, such as a 48 V mild hybrid electrical vehicle, that may generate continuous overvoltage an overvoltage of 40 V or more can be blocked, thereby possibly protecting an overvoltage. In addition, by implementing a circuit with simple elements, it is easy to utilize PCB space, and it is possible to implement at low cost even when adding a circuit.

Those skilled in the art related to the present embodiment will be able to understand that it can be implemented in a modified form within a range that does not deviate from the essential characteristics of the above description. Therefore, the disclosed methods are to be considered in an illustrative rather than a limiting sense. The scope of the present invention is shown in the claims rather than the foregoing description, and all differences within the equivalent scope will be construed as being included in the present invention.

## Claims

1. An over-voltage protection circuit comprising:
an input terminal to which power is inputted and an output terminal which outputs the power to a load;
a first switch that is located between the input terminal and the output terminal and blocks the output to the load when being turned off;
a first Zener diode that is connected to the input terminal and conducted upon detecting an overvoltage;
a second switch that is turned on when the first Zener diode is conducted; and
a third switch that turns on when the first switch is turned on,
wherein the first switch is turned on by the power being inputted to the input terminal, and turned off when the third switch is turned on.

2. The over-voltage protection circuit according to claim 1,
wherein the first switch is PMOS,
wherein a cathode of the first Zener diode is connected to a drain of the first switch, and
wherein an anode of the first Zener diode is connected to ground through a first resistor and a second resistor connected in series.

3. The over-voltage protection circuit according to claim 2,
wherein the second switch is an NMOS,
wherein a gate of the second switch is connected to a node between the first resistor and the second resistor,
wherein a source of the second switch is connected to ground, and
wherein a drain of the second switch is connected to a third resistor and a fourth resistor connected in series.

4. The over-voltage protection circuit according to claim 3,
wherein the third switch is a PMOS,
wherein a gate of the third switch is connected to a node between the third resistor and the fourth resistor,
wherein a source of the third switch is connected to ground through a fifth resistor, and
wherein a drain of the third switch is connected to the drain of the first switch.

5. The over-voltage protection circuit according to claim 4,
wherein the gate of the first switch is connected to a node between the source of the third switch and the fifth resistor,
wherein the source of the first switch is connected to the output terminal, and
wherein the drain of the first switch is connected to the input terminal.

6. The over-voltage protection circuit according to claim 5 comprising:
a sixth resistor and a second Zener diode respectively connected in parallel between the gate and the drain of the first switch

7. The over-voltage protection circuit according to claim 6,
wherein a value of the fifth resistor is greater than a value of the sixth resistor, and
wherein the first switch is turned on by the voltage distribution of the fifth resistor and the sixth resistor when a power is inputted to the input terminal.

8. The over-voltage protection circuit according to claim 6,
wherein the second Zener diode detects an overvoltage applied to the gate of the first switch.

9. The over-voltage protection circuit according to claim 1,
wherein the input terminal receives power from a battery or a DC-DC converter charging the battery.

10. The over-voltage protection circuit according to claim 1,
wherein the output terminal is connected to a battery management system.
